Europäisches Patentamt

European Patent Office

Office européen des brevets

(19)

(11) **EP 0 694 148 B1**

(12) **EUROPÄISCHE PATENTSCHRIFT**

(45) Veröffentlichungstag und Bekanntmachung des Hinweises auf die Patenterteilung:
**18.06.1997   Patentblatt 1997/25**

(51) Int Cl.⁶: **F23G 7/10**, F23C 1/00, F23K 1/00, F23J 1/02, F26B 9/10, F26B 3/32

(21) Anmeldenummer: **94913585.9**

(22) Anmeldetag: **13.04.1994**

(86) Internationale Anmeldenummer:
**PCT/EP94/01136**

(87) Internationale Veröffentlichungsnummer:
**WO 94/24486 (27.10.1994 Gazette 1994/24)**

(54) **VERFAHREN UND ANLAGE ZUR VERBRENNUNG VON BIOSTOFFEN UND KOHLENSTAUB**

PROCESS AND INSTALLATION FOR BURNING ORGANIC MATERIALS AND COAL DUST

PROCEDE ET INSTALLATION PERMETTANT DE BRULER DES MATIERES ORGANIQUES ET DU CHARBON PULVERISE

(84) Benannte Vertragsstaaten:
**AT DE DK ES SE**

(30) Priorität: 16.04.1993  DE 4312902
16.04.1993  DE 4312901
16.04.1993  DE 4312900
16.04.1993  DE 4312899
16.04.1993  DE 4312897
18.06.1993  DE 4320912
21.10.1993  DE 4336415
21.01.1994  DE 4402130
27.01.1994  DE 4402770

(43) Veröffentlichungstag der Anmeldung:
**31.01.1996   Patentblatt 1996/05**

(73) Patentinhaber: **VEAG VEREINIGTE ENERGIEWERKE AKTIENGESELLSCHAFT**
**D-12681 Berlin (DE)**

(72) Erfinder:
• **BAUER, Franz**
**D-45527 Hattingen (DE)**
• **WETZEL, Horst**
**D-03172 Guben (DE)**
• **STRÖER, Kurt**
**D-03222 Lübbenau (DE)**
• **KORITZ, Dieter**
**D-15913 Goyatz (DE)**
• **WITT, Detlef,**
**Arbeiterwohnheim des KW Jänschwalde**
**D-03044 Cottbus (DE)**
• **SCHULZE, Herbert**
**D-03149 Forst/Lausitz (DE)**
• **MÜLLELLERBUCHHOF, Günter**
**D-01257 Dresden (DE)**
• **GEISLER, Siegfried**
**D-03222 Lübbenau (DE)**
• **KLEMPROW, Klaus**
**D-13086 Berlin (DE)**
• **BLOSSFELD, Otfried**
**D-01737 Tharandt (DE)**
• **GROSSMANN, Karin**
**D-01259 Dresden (DE)**
• **MISCHKE, Matthias**
**D-01129 Dresden (DE)**
• **STAHN, Thilo**
**D-01187 Dresden (DE)**

(74) Vertreter: **Zinken-Sommer, Rainer**
**VEAG Vereinigte Energiewerke AG**
**Referat Patent- und Lizenzwesen**
**Allee der Kosmonauten 29**
**12681 Berlin (DE)**

(56) Entgegenhaltungen:
EP-A- 0 206 340          WO-A-90/12986
DE-A- 3 315 823          DE-C- 3 615 565

• POWER, Bd.126, Nr.2, Februar 1982, NEW YORK US Seiten 57 - 60 ROYCE J HOLLAND 'UTILITY REDUCES FUEL COST WITH HEAT RECOVERY, INDUSTRIAL BYPRODUCT FUEL, COGENERATION'
• TAPPI, Bd.63, Nr.3, März 1980, NEW YORK US Seiten 35 - 36 BERTIL FAGERLUND 'HOW SOME SCANDINAVIAN MILLS GET HIGHER FUEL VALUE FROM BARK'

**Beschreibung**

Die Erfindung betrifft ein Verfahren und eine Anordnung zur Verbrennung von Biostoffen, insbesondere Hackschnitzel, in einem kohlenstaubgefeuerten Dampfkessel oder einer Wirbelschichtfeuerung.

Zur Verbrennung von Biostoffen, wie Holzabfälle, Waldrestholz, Plantagenholz oder nachwachsende Biostoffe (Jungbäume, Gestrüpp, Stroh, Schilf u. a.) zum Zwecke der Entsorgung, (Deponieentlastung), Verwertung sowie Entsorgung von in Regionen wachsenden Biostoffen (Naturschutz) und der Verringerung des $CO_2$-Ausstoßes von Kohlenstaubfeuerungen durch Substitution der Rohbraunkohle ist es bekannt, Zusatzfeuerungen oder Vorfeuerungen in Verbindung mit kohlenstaubgefeuerten Dampfkesseln zu betreiben (z. B. DD-PS 244 894, DD-PS 293 635, DD-PS 296 619, DE-OS 33 15 823, DE-OS 24 32 640, DE-OS 39 04 286, 30 31 154, DE-OS 34 44 480, DE-OS 35 29 615). Dabei werden die in der Vorfeuerung erzeugten Heißgase der Brennkammer des Dampfkessels aufgegeben. Für die Aufstellung, die Regelung und den Betrieb der Vorfeuerung müssen jedoch erhebliche Aufwendungen betrieben werde, um die Vorfeuerung > 10 MW für einen Dampfkessel > 50 MW stabil zu betreiben und damit die angestrebten Effekte auch zu erreichen.

Alle bisher bekannten Maßnahmen stellen jeweils nur eine Teillösung eines Einzelproblems dar und ergeben keine komplexe Lösung für den Betrieb einer Vorfeuerung in Verbindung mit einem kohlenstaubgefeuerten Dampfkessel oder einer Wirbelschichtfeuerung.

Es ist bekannt, Biostoffe und Kohle ohne Schwierigkeiten gemeinsam zu verbrennen, wenn die Biostoffe vorher so aufbereitet werden, daß diese kohleähnliche Eigenschaften enthält (Power, Vol. 126, No. 2, February 1982, Seite 57 - 60, Royce Holland, "Utility reduces fuel cost with heat recovery, industrial by product fuel, Cogeneration"). Diese Aufbereitung erfordert jedoch hohe anlagentechnische und technologische Aufwendungen, ohne daß der gesamte Prozeß, wie z. B. der Aufarbeitung der Verbrennungsrückstände, beeinflußt werden kann.

Der Erfindung liegt die Aufgabe zugrunde, die Verbrennung von Biostoffen direkt in einem kohlenstaubgefeuerten Dampfkessel oder einer Wirbelschichtfeuerung zu integrieren.

Dies wird dadurch erreicht, daß erfindungsgemäß der Biostoff als ein Brennstoff-Teilstrom und die aus der Trocknung, Entgasung und/oder Teilverbrennung des Biostoffs erzeugten Gase als ein Gas-Teilstrom in eine Kohlenstaubmühle und Rauchgasrücksaugung und dann in die Brennkammer und/oder direkt in die Brennkammer des Dampfkessels eingetragen und die Verbrennungsprodukte als ein Verbranntes-Teilstrom über eine Rauchgasreinigung und als ein Unverbranntes-Teilstrom über eine Naßentaschungsanlage ausgetragen wird, wobei das Unverbrannte als Brennstoff-Teilstrom in die Kohlenstaubmühle, Rauchgasrücksaugung und Brennkammer und/oder Ausbrandrost oder direkt in die Brennkammer und/oder Ausbrandrost des Dampfkessels zurückgeführt wird.

Zur Realisierung ist erfindungsgemäß ein Biostoffzuteiler in die Kohlenstaubmühle, Rauchgasrücksaugung und/oder Brennkammer und/oder in eine Trocknungs-, Entgasung- und/oder Verbrennungseinrichtung an einem Brennkammerbereich des Dampfkessels eingebunden und die Naßentaschungsanlage des Dampfkessel über einen Unverbranntes-Zuteiler in die Kohlenstaubmühle, Rauchgasrücksaugung und Brennkammer und/oder Ausbrandrost oder direkt in die Brennkammer und/oder Ausbrandrost des Dampfkessels eingebunden.

Die Verbrennung von Biostoff, insbesondere Holzhackschnitzel, in einer Wirbelschichtfeuerung, erfolgt so, daß der Biostoff als ein Brennstoff-Teilstrom und die aus der Trocknung, Entgasung und/oder Teilverbrennung des Biostoffs erzeugten Gase als ein Gas-Teilstrom in die Wirbelschichtfeuerung eingetragen und die Verbrennungsprodukte als ein Verbranntes-Teilstrom über eine Rauchgasreinigung ausgetragen wird, wobei das Unverbrannte als ein Brennstoff-Teilstrom in die Wirbelschichtfeuerung zurückgeführt wird.

Anhand eines Ausführungsbeispiels wird die Erfindung näher erläutert. Die dazugehörige Zeichnung zeigt

Fig. 1: Die Einbindung der Biostoff-Trocknung- und -Entgasung in das Dampfkesselsystem im Prinzip

Fig. 2: Die Anordnung der mit dem Ausbrand-Rost versehenen Trocknungs-, Entgasungs- und Verbrennungskammer an der Brennkammer-Stirnwand des Dampfkessels im Prinzip

Fig. 3: Die Anordnung in der Seitenansicht

Fig. 4: Die Einbindung der Vorfeuerung in die Dampfkesselanlage, wobei die Heißgase aus der Vorfeuerung in den Trichterbereich der Brennkammer gefördert werden.

Fig. 5: Das Prinzipbild des Umlaufprozesses am kohlenstaubgefeuerten Dampfkessel

Fig. 6: Die zweistufige Trennung des Unverbrannten

Fig. 7: Die Kraftwerksanlage mit mehreren Dampfkesseln und Naßentaschungsverbund

Fig. 8: Die Dampfkesselanlage mit Direktrückführung der Naßasche

Fig. 9: Den Aufbau der Durchlauf- und Puffer-Anordnung im Prinzip

Fig. 10: Die grafische Darstellung des Verlaufes von Temperaturerhöhung und Wassergehaltsminderung in Abhängigkeit von der Lagerdauer (stark vereinfacht)

Fig. 11: Die Anordnung der Temperaturmeßstelle im Holzhackschnitzel-Haufwerk

Fig. 12: Die Anordnung der Schubeinrichtung im Hackschnitzel-Haufwerk in Prinzipdarstellung

Fig. 13:	Die Anordnung der stationären Schubeinrichtung mit seitlicher Abförderung in Prinzipdarstellung

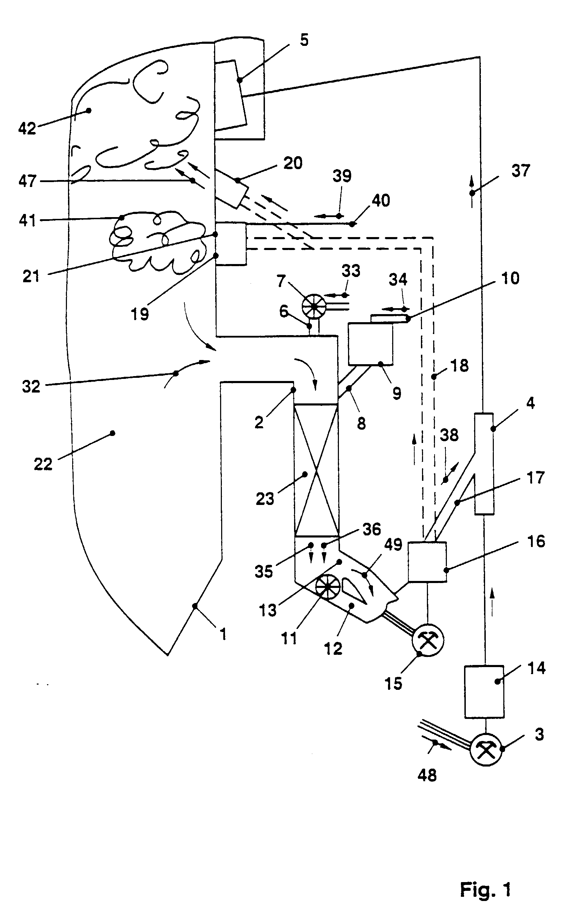

Der Dampfkessel 1 weist die Rauchgasrücksaugung 2 und die Mahlanlage 3 mit Staubleitung 4 und Brenner 5 auf (Fig. 1). An der Rauchgasrücksaugung 2 befindet sich der Rohkohleschacht 6 und Zuteiler 7 und der Biostoffschacht 8 mit Vorratsbehälter 9 und Zuteilband 10. Unterhalb des Rauchgasrücksaug-Schachtes 23 ist der Zuteiler 11 mit Anschlußkanal 12 und/oder der Gaskanal 13 angeordnet. Der Rauchgasrücksaug-Schacht 23 mündet in die Mahlanlage 3 und Sichter 14 und/oder in die Zusatzmahlanlage 15 mit Sichter 16. Zwischen Zusatzmahlanlage 15 und Mahlanlage 3 besteht der Kanal 1 7, und/oder die Zusatzmahlanlage 15 weist den Staubschacht 18 mit Brenner 19 bzw. Einblaseeinrichtung 20 im Bereich der Stirnwand 21 der Brennkammer 22 auf.

Der Rauchgasrücksaug-Schacht 23 weist die Einmauerung sowie den Trocknungs- und Entgasungsschacht , die Gesrohre mit den Öffnungen, das Zentralrohr mit den Öffnungsschlitzen oder die Trennwand mit den Gasöffnungen auf.

Die Wirkungsweise besteht darin, daß heiße Rauchgase 32 aus der Brennkammer 22 über die Rauchgasrücksaugung 2 von der Mahlanlage 3 und/oder Zusatzmahlanlage 15 angesaugt werden (Fig. 1). In den Rauchgasrücksaug-Schacht 23 wird Rohbraunkohle 33 über die Zuteileinrichtung 7 zugeführt. Gleichzeitig zum Kohlestrom erfolgt die Zuteilung von Biostoffen 34.

Die Zuteilung der Biostoffe 34 erfolgt direkt in die Rauchgasrücksaugung 2 oder in den Trocknungs- und Entgasungsschacht, der allseitig von den Heißgasen 32 umspült wird. Die Biostoffe 34 werden aufgeheizt und entgast bzw. teilverbrannt. Die entstehenden Gase 35 gelangen über den Anschlußkanal 12 und/oder mit den entgasten und/oder teilverbrannten Biostoffen 36 über den Zuteiler 11 (Fig. 1) mit der vorgetrockneten Rohbraunkohle 48 in die Mahlanlage 3. In der Mahlanlage 3 werden die so aufbereiteten Biostoffe 36 als mahlbare Stoffe mit der Rohbraunkohle 48 vermahlen und als Staubstrom 37 über Sichter 14 und Staubkanal 4 den Brennern 5 zugeführt.

Es ist jedoch auch möglich, die aufbereiteten Biostoffe 36 über den Anschlußkanal 12 mit dem Heißgaskanal 49 über den Gaskanal 13 der Zusatzmahlanlage 15 zuzuführen. In der Zusatzmahlanlage 15 und Sichtanlage 16 werden die aufbereiteten Biostoffe 36 fein vermahlen und als Biostoff-Staub-Gemisch 38 über den Kanal 17 in die Staubleitung 4 eingeleitet und/oder über den Staubschacht 18 in den Brenner 19 geleitet. Mittels Zufuhr von Luft 39 aus dem Heißluftkanal 40 wird das Biostoff-Staub-Gemisch 38 in der Flamme 41 verbrannt und/oder über die Einblaseeinrichtung 20 als Staubstrahl 47 in die Staubflamme 42 eingeblasen und verbrannt.
Die Biostoffe 34 werden um die Gasrohre, die von Rauchgasen durchströmt werden, geleitet.
Über die Öffnungen 27 werden Heißgasteilströme 43 in die Biostoffe 34 geleitet. Die eingelagerten Biostoffe 34 werden thermisch aufbereitet, mahlbar gemacht und in die Mahlanlage 3 und/oder Zusatzmahlanlage 15 eingeleitet. Das Zentralrohr wird von den rückgesaugten Rauchgasen 32 durchströmt und über die Öffnungsschlitze die Heißgasteilströme den Biostoffen 34 zugeführt.
Zur thermischen Aufbereitung der Biostoffe 34 werden die Heißgasteilströme über die Gasöffnungen in der Trennwand in die Biostoffe 34 eingeleitet.

Es ist auch möglich, daß die entstehenden Gase 35 bei der Aufbereitung der Biostoffe 34 direkt der Mahlanlage 3 über den Gaskanal 13 und die aufbereiteten Biostoffe 36 über Zuteiler 11 sowie Anschlußkanal 12 der Zusatzmahlanlage 15 zuzuführen (Fig. 1).
Mit dieser Trennung kann eine gesonderte Vermahlung oder eine andere Verwendung der aufbereiteten Biostoffe 36 erfolgen.

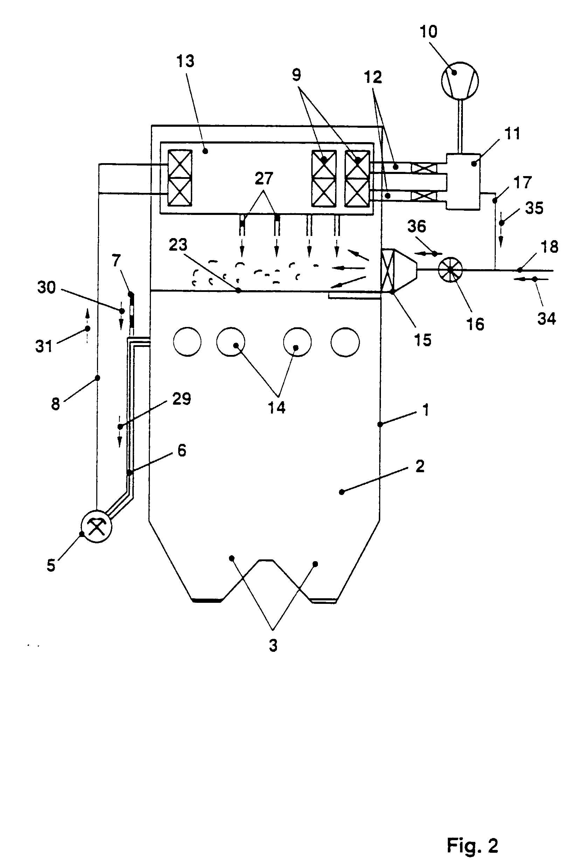

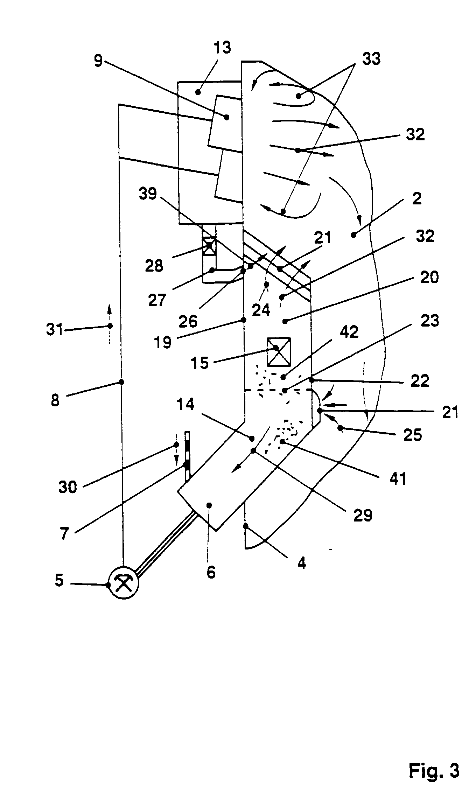

Der Dampfkessel 1 mit der Brennkammer 2, den Aschetrichter 3 und der Berohrung 4 weist die Kohlenstaubmühle 5 auf (Fig. 2). Die Kohlenstaubmühle 5 besteht aus der Rauchgasrücksaugung 6, der Kohlezuführung 7 der Kohlenstaubleitung 8 und den Kohlenstaubbrennern 9. Der Lüfter 10 ist über den Heißluftkanal 11 und der Verbrennungsluftleitung 12 mit den Brennern 9 und den Heißluftkasten 13 verbunden. Seitlich und/oder oberhalb der Öffnungen 14 für die Rauchgasrücksaugung 6 ist die Einbleseeinrichtung 15 für die Biostoffe 34 angeordnet und mit der Zerkleinerungseinrichtung 16 (Hächsler, Schredder), eingebundenen Heißluftkanal 17 sowie Transportleitung 18 verbunden. Im Abstand von der Stirnwand 19 der Brennkammer 2 ist die Ausbrandkammer 20, bestehend aus dem Rohrsystem der Berohrung 22, angeordnet (Fig. 3).

Die Ausbrandkammer 20 weist den Siebrost 23, das Durchtrittsgitter 21 und die Luftdüsen 26 mit Leitung 27 sowie Regelklappen 28 auf.

Die Wirkungsweise ist folgende:
Über die Rauchgasrücksaugung 6 werden heiße Rauchgase 29 von der Kohlenstaubmühle 5 angesaugt und zusammen mit der Kohle 30 nach der Vermahlung über die Kohlenstaubleitung 8 als Kohlenstaub-Rauchgas-Gemisch 31 den Kohlenstaubbrennern 9 zugeführt.

Aufgrund der Brennerkonstruktion wird die Flamme 32 mit den Rezirkulationswirbeln 33 in der Brennkammer aufrechterhalten. Im Bedarfsfall wird Biostoff 34 in unterschiedlicher Qualität und Form über die Leitung 18 sowie Einblaseeinrichtung 15 und Heißluft 35 aus dem Heißluftkanal 11 der Ausbrandkammer 20 zugeführt. Dieses Biostoff-Heißluft-Gemisch 36 wird mit relativ hohem Impuls unmittelbar oberhalb der Öffnungen 14 der Rauchgasrücksaugung 6 auf den Rost 23 eingeblasen.

Es ist auch möglich, Verteilerrohre 37 zur Verteilung des Gemisches 36 über die Breite des Dampfkessels 1 vorzusehen. Entsprechend leichte Biostoff-Bestandteile verbrennen in der Ausbrandkammer 20 bzw. werden über das Durchtrittsgitter 21 mit dem Ausbrandgas 24 in die Brennkammer 2 und den Rezirkulationswirbel 33 geblasen. Der hohe Anteil an flüchtigen Bestandteilen der Biostoffe 34 erfordert eine Zufuhr von Luft 39, die gleichzeitig als Tertiär- oder Sekundärluft der Kohlenstaubfeuerung wirkt und das Gas 38 erzeugt wird. In den Oberteil der Ausbrandkammer 20 wird die Luft 39 über die Luftdüsen 26 geregelt, durch die Regelklappe 28 zugeleitet. Die schwer abbrennbaren Anteile 40 der Biostoffe 34 fallen auf die Fläche des Rostes 23, brennen dort weiter aus und fallen nach weitgehendem Ausbrand vor die Öffnungen 14 der Rauchgasrücksaugung 6. Die angesaugten Rauchgase 29, die über das Durchtrittsgitter 21 als Rücksauggas 25 in das Unterteil 41 der Ausbrandkammer 20 gesaugt werden, tragen die unverbrannten Anteile der Biostoffe 42 in die Kohlenstaubmühle 5. In der Kohlenstaubmühle 5 werden diese schwer abbrennbaren Anteile 42 gemahlen, aufbereitet und über die Kohlenstaubbrenner 3 in die Brennkammer 2 eingeblasen. Als Rost 23 ist ohne weiteres ein Kipp- oder Wanderrost anzuordnen.

Als Biostoff 34 ist z. B. auch zu Ballen gepreßte brennbare Stoffe, wie Stroh, einzusetzen.

In die Seitenwand innerhalb oder außerhalb des Dampfkessels 1 ist der Schacht mit Schleuse angeordnet. Der Schacht ist als Aufbereitungs-Entgasungs-Schacht ausgebildet und besteht aus der Membranwand, die im oberen Teil als Durchtrittsgitter 21 ausgebildet ist. Der Schacht ist über die Leitung 27 mit dem Heißluftkanal 11 verbunden. Im unteren Teil des Schachtes ist das Ausbrandrost und/oder Zerkleinerer angeordnet. An dem Ausbrandrost schließt der Kanal, Zuteiler und die Einblasemühle an. Der Brenner ist über die Leitung mit der Einblasemühle verbunden. Der Brenner weist die Leitung mit Regelklappe auf. Für die direkte Einbindung des Kanals und/oder Schachtes in den Dampfkessel 1 sind die Kanäle wahlweise vorgesehen.

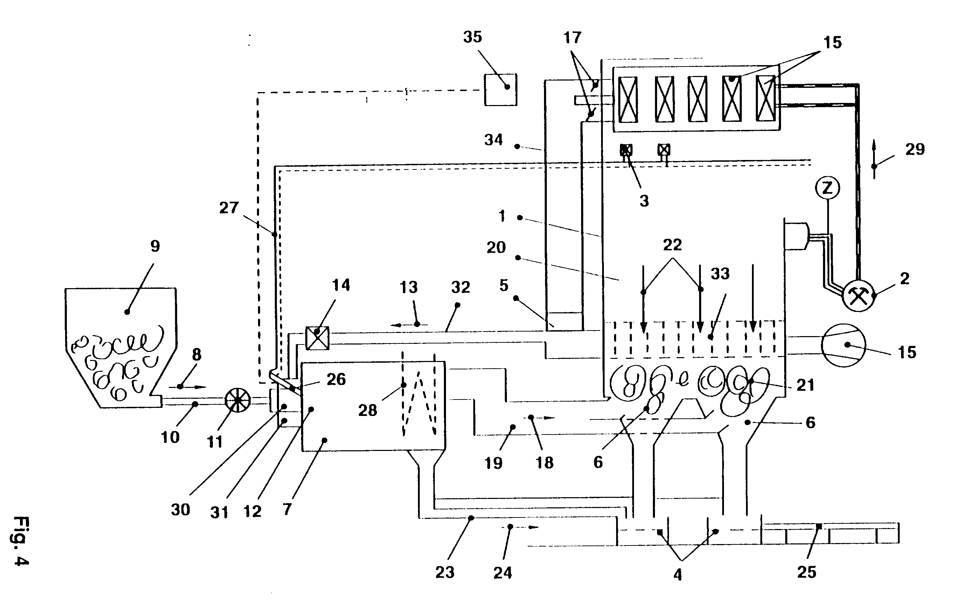

Der Dampfkessel 1 weist die Kohlenstaub-Mahlanlage 2, die Ölbrenneranlage 3, die Kratzerbänder 4, die Luftversorgungs-Hauptleitung 5, die Aschetrichter 6, die Kohlenstaubbrenner 16 und die Brennkammer 20 auf (Fig. 4). Unmittelbar neben dem Dampfkessel 1 ist die Vorfeuerung 7 mit Brenner 30 und Brennkammer 12 angeordnet.

Die Vorfeuerung 7 ist über den Zuteiler 11 und der Transportanlage mit dem Bunker 9 (Lagerplatz) verbunden. Die Vorfeuerung weist den Ölbrenner 26 auf, der über die Versorgungsleitung 27 mit der Ölbrenneranlage 3 verbunden ist. Der Brenner 30 weist den Luftkasten 31 auf, der über den Luftkanal 32 und Regeleinrichtung 14 mit der Luftversorgungshauptleitung 5 verbunden ist. Die Luftversorgungs-Hauptleitung 5 ist in die Nachschaltheizflächen 33 des Dampfkessels 1 eingebunden und mit dem Frischlüfter 15 verbunden. In die Luftversorgungs-Hauptleitung 5 ist die zu den Kohlenstaubbrennern 16 führende Verbrennungsluftleitung 34 mit Heißluftklappen 17 eingebunden.

Die Vorfeuerung 7 ist über die Heißgasleitung 19 in den Aschetrichter 6 der Brennkammer 20 eingebunden und über die Ascheleitung 23 mit der Naßascheentsorgung 25 verbunden.

Die Vorfeuerung ist wahlweise mit den Heizflächen 28 zu versehen, die in das Heizflächensystem des Dampfkessels 1 oder einen Wärmeverbraucher eingebunden ist.

Die Vorfeuerung 7 ist in die Sicherheits-Notschaltung 35 des Dampfkessels 1 einbezogen.

Die Wirkungsweise ist folgende:

Die Zufuhr der Biostoffe 8 zur Vorfeuerung 7 erfolgt vom Bunker 9 über die Transporteinrichtung 10 und den Zuteiler 11 zum Brenner 30 und in die Brennkammer 12.

Die erforderliche Verbrennungsluft 13 wird dem Heißluftkanal 5 über den Luftkanal 32 entnommen und entsprechend dem Bedarf durch die Regeleinrichtung 14 gesteuert (geregelt).

Zur Aufrechterhaltung einer entsprechenden Luftpressung vor Regeleinrichtung 14 wird der Frischlüfter 15 voll ausgefahren und die Luftmengensteuerung der Kohlenstaubbrenner 16 über die Heißluftklappen 17 vorgenommen.

Mit diesem Schaltzustand wird eine maximale Heißluftpressung im Heißluftkanal 5 erreicht.

Die aus der Biostoff-Verbrennung erzeugten Heißgase 18 werden über die Heißgasleitung 19 in die Aschetrichter 6 des Dampfkessels 1 bei einem Unterdruck von ca. 20 kPa geleitet. Dabei unterstützt der Unterdruck im Bereich der Aschetrichter 6 der Brennkammer 20 die Ableitung der Heißgase 18 aus der Vorfeuerung 7.

Es ist jedoch auch möglich, die Biostoff-Verbrennung mit Überdruck zu betreiben.

Die eingeleiteten Heißgase 18 heben das Temperaturniveau in der Brennkammer 20 durch Aufrechterhaltung von Heißgaswirbeln 21 an, vermischen sich mit den Brenngasen 22 aus der Staubfeuerung und sichern dabei eine gute Wärmeübertragung an die Siederohrheizflächen der Aschetrichter 6.

Der Luftüberschuß in den Heißgase 18 mit $O_2 > 10$ % hat die Wirkung einer Ausbrandluft mit dem weitgehend vollständigen Abbrand von CO in dem sicheren Temperaturbereich $t_f > 700$ °C.

Mitgetragene unverbrannte Feinanteile aus der Biostoff-Verbrennung werden im weiteren Gasweg in den Zügen, insbesondere im zweiten Zug des Dampfkessels 1 vollständig ausgebrannt.

Aufgrund dieser Einblasung ist die Hauptfeuerung des Dampfkessels 1 mit den Kohlenstaubbrennern 16 mit einem niedrigen Luftüberschuß bei entsprechend geringer $NO_x$-Bildung im Bereich der Staubfeuerung betreibbar. Die eingeleiteten Heißgase mit dem $O_2$-Gehalt von > 10 % sichern die Oxidation von CO zu $CO_2$. Diese Technologie der Einblasung weit unterhalb der Hauptfeuerung des Dampfkessels 1 wirkt wie eine Ausbrandluft in einem sicheren thermischen Temperaturbereich, der den CO-Gehalt mindert. Die Hauptfeuerung mit dem Kohlenstaub-Fördergas-Gemisch

EP 0 694 148 B1

29 wird damit mit einem geringen Luftüberschuß < 1,3 betrieben, so daß die $NO_x$-Bildung geringer wird.

Über die Ascheleitung 23 wird die Asche 24 aus der Biostoff-Verbrennung der Naßascheentsorgung 25 und /oder der Mahlanlage 2 zugeführt.

Zur Sicherung eines ständigen Abbrandes der Biostoffe 8 in der Vorfeuerung 7 ist der Ölbrenner 26 angeordnet. Über die Heizflächen 28 wird eine Wärmeentbindung der Heißgase 18 ermöglicht. Bei entsprechender Steuerung der Gesamtanlage, bestehend aus Dampfkessel 1 und Vorfeuerung 7, ist die Biostoff-Verbrennung intermittierend bzw. in der Wärmeleistung von Minimallast bis Maximallast betreibbar. Aufgrund der Einleitung der Heißgase 18, Nutzung der Entsorgungseinrichtungen 25 sowie der ständigen Heißluftbereitstellung wird ein breites Leistungsband der Biostoff-Verbrennung gesichert.

Zur Aufrechterhaltung der Zündung der Biostoffe 8 ist der Ölbrenner 26 mit Dampfdruckzerstäubung in einem Leistungsbereich von 2 bis 5 MW thermisch sowie die Heißgasrücksaugung aus der Brennkammer realisierbar. Damit entfällt eine separate Ölversorgung.

Die Biostoff-Verbrennung in der Vorfeuerung 7 ist mit einer maximalen thermischen Leistung von ca. 60 MW, das entspricht bei Vollast (100 MW el.) 20 % der Feuerungsleistung des Dampfkessels 1, und im Teillastbetrieb (70 MW el. technische Mindestlast) mit max. 40 MW thermisch zu betreiben. Mit diesem Leistungsangebot wird die Aufrechterhaltung der Kesselregelung der Kohlenstaubfeuerung des Dampfkessels 1 gesichert. Eine Aufschaltung der Kesselregelung auf die Vorfeuerung 7 zur Biostoff-Verbrennung ist nicht erforderlich bzw. sinnvoll, sie kompliziert die Gesamtanlage ohne nennenswerte Vorteile. Um im Störfall den Abschaltbedingungen gerecht zu werden, ist die Vorfeuerung 7 in die Sicherheits-Notschaltung 35 einzubeziehen, d. h. Abschaltung des Ölbrenners 26 und Unterbrechung der Zufuhr der Biostoffe 8.

Die Entnahme der Verbrennungsluft 32 aus dem bestehenden Luftversorgungssystem ($t_L \sim 280\ °C$) ist aufgrund der vorhandenen Reserven im System unproblematisch. Bei der Einbindung der Heißgase 18 aus der Vorfeuerung 7 in den Staubkessel 1 ist die gesamte Abgasentsorgung einschließlich Entstaubung gesichert.

Eine gesonderte Emissionsmeßtechnik für die Biostoff-Verbrennung in der Vorfeuerung 7 ist nicht erforderlich. Die Abrechnung gegenüber der Behörden erfolgt über die Emissionsmeßtechnik des Dampfkessels 1.

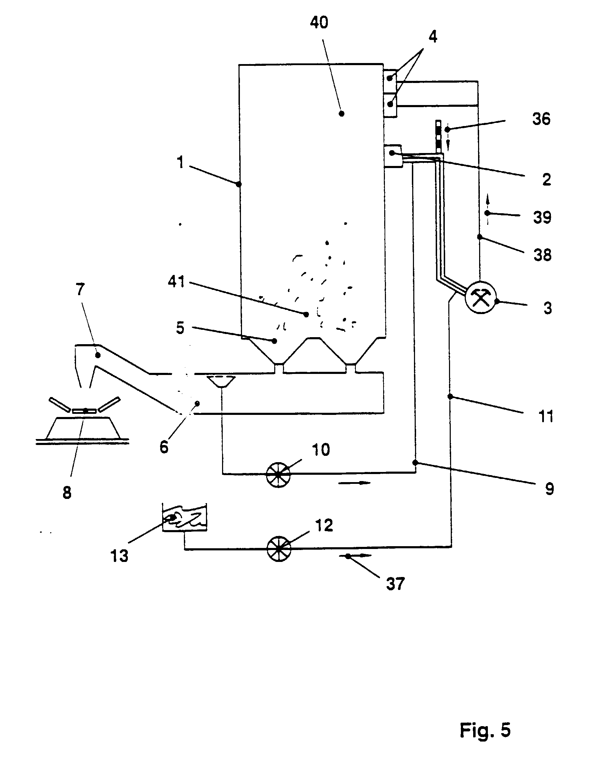

Der Dampfkessel 1 mit der Rauchgasrücksaugung 2, der Mahlanlage 3 und den Kohlenstaubbrennern 4 weist die Aschetrichter 5 und die Naßentaschungsanlage 6 auf (Fig. 5). Der Naßascheaustrag 7 endet über dem Naßascheband 8.

Zwischen der Naßentaschungsanlage 6 und der Rauchgasrücksaugung 2 ist die Transporteinrichtung 9 eingebunden. Unmittelbar nach der Naßentaschungsanlage 6 ist die Trennanlage 10 eingebunden. Vor der Mahlanlage 3 ist die Biostoff-Transportanlage 11 mit dem Zuteiler 12 und Biostoffspeicher 13 angeordnet. Die Tröge 9.1; 9.2 der Naßentaschungsanlage 6 des Dampfkessels weisen die Kratzerkette 14 auf, die mit dem Obertrum 15 im Wasserbad 16 und mit dem Untertrum 17 im Trockenem läuft. Die Trogwangen 18.1; 18.2 weisen den Überlauf 19 auf. Am Überlauf 19 sind die Ablaufrinnen 20.1; 20.2 angeschlossen, die in den Trog 21 münden. Der Trog 21 weist den Siebboden 22 und den Wasserleitboden 23 auf. Innerhalb des Troges 21 besteht die Austrageinrichtung 35 mit den Bechern 24. Die Becher 24 sind als Siebe gestaltet. Über die Transporteinrichtung 25 besteht die Verbindung zwischen Austrageinrichtung 35 und Rauchgasrücksaugung 2 der Mahlanlage 3. Der Ablaufkanal 26 des Troges 21 weist die Saugleitung 27 mit Pumpe 28 auf. Die Druckleitung 29 mit der Absperr- und/oder Regeleinrichtung 30 mündet in den Strahlapparat 31. Zur Regulierung des Wasserstandes 32 besteht die Zusatzwasserleitung 33; 34.

Die Wirkungsweise ist folgende:

Rohbraunkohle 36 wird über die Rauchgasrücksaugung 2 der Mahlanlage 3 zugeführt (Fig. 5). Gleichzeitig wird der Mahlanlage 3 kontinuierlich und/oder diskontinuierlich Biostoffe 37 über die Transportanlage 11, Zuteiler 12 und Biostoffspeicher 13 zugemischt. Über die Staubleitung 38 und Kohlenstaubbrenner 4 wird das Kohlen-Biostoff-Staubgemisch 39 in die Brennkammer 40 des Dampfkessels geblasen. Aufgrund der schlechten Mahlbarkeit der Biostoffe 37 in der Mahlanlage 3 fällt ein Teil der Biostoffe 37 als Unverbranntes 41 in der Brennkammer 40 über die Aschetrichter 5 aus.

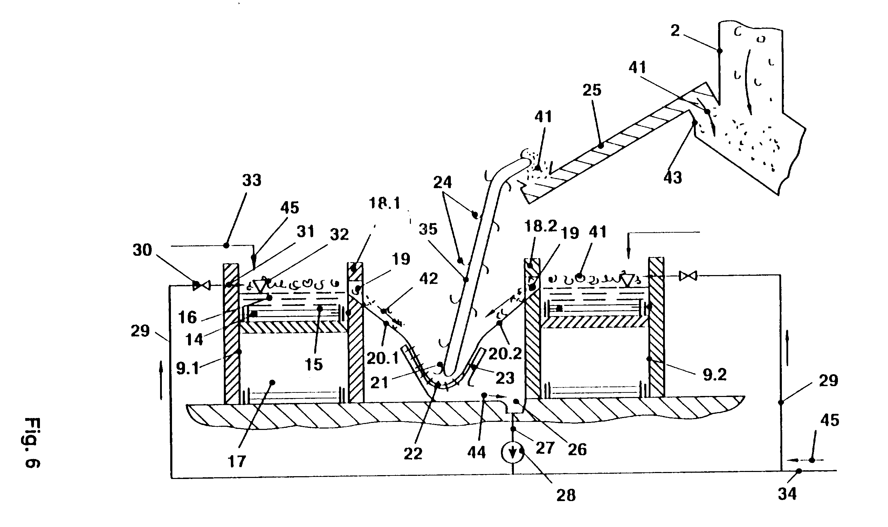

Diese leichten Anteile des Unverbrannten 41 schwimmen an der Oberfläche des Wasserbades 16 der Naßentaschungsanlage 9 (Fig. 6). Das Unverbrannte 41 wird mit Hilfe der Strahlapparate 31 und/oder Leiteinrichtungen in den Überlauf 19 geleitet. Das Wasser-Unverbrannte-Gemisch 42 gleitet über den im Trog 21 angeordnetem Siebboden 22, und das Wasser 44 fließt ab. Das Unverbrannte 41 wird mittels der Austrageinrichtung 35 mit deren Becher 24 bei gleichzeitig ständiger Entwässerung ausgetragen. Mit Hilfe der Transporteinrichtung 25 gelangt das Unverbrannte 41 über den Stutzen 43 in die Rauchgasrücksaugung 2 der Mahlanlage 3. Das ablaufende Wasser 44 wird mittels der Pumpe 28 über die Druckleitung 29 erneut dem Strahlapparat 31, gesteuert mit Hilfe der Regeleinrichtung 30, zugeführt. Der Wasserverlust wird ständig durch Frischwasser 45 über die Leitung 33; 34 aufgefüllt. Aufgrund der thermischen Aufbereitung des Unverbrannten 41 wird die Mahlbarkeit verbessert und der Anteil der ausfallenden teilverbrannten Anteile geringer. Diese Verringerung wird durch ständige Zufuhr von Biostoff 37 aus dem Biostoffspeicher 13 aufgefüllt. Dieser ständige Umlauf an Unverbrannten sichert letztlich einen vollständigen Biostoffabbrand in der Kohlenstaubfeuerung. Die Biostoffzufuhr wird mit 5 % bis 30 % der thermischen Kesselleistung festgeschrieben.

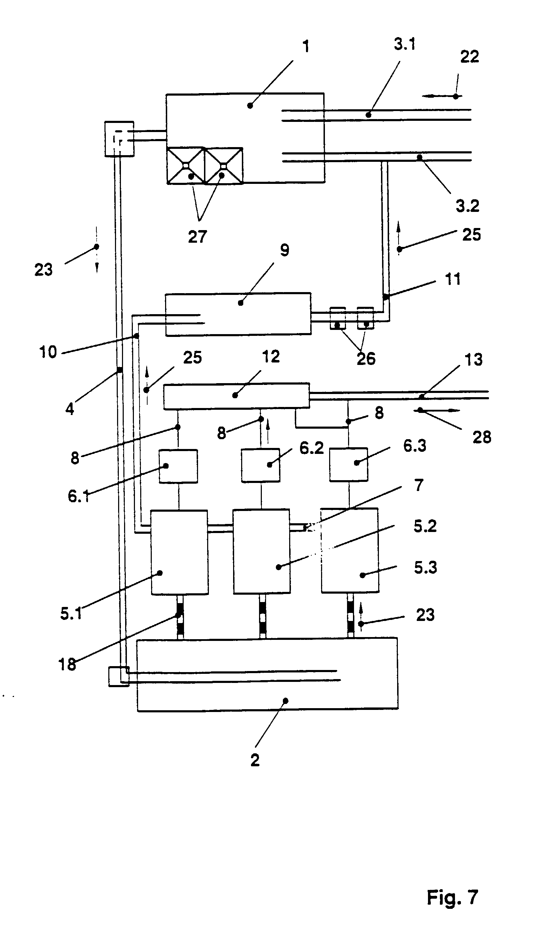

Die Kraftwerksanlage weist den Kohletiefbunker 1 und den Kohlehochbunker 2 auf (Fig. 7). Der Kohletiefbunker 1 mit Bunkertaschen 27 weist die Gleisanlagen 3.1; 3.2 auf. Zwischen Kohletiefbunker 1 und Kohlehochbunker 2 besteht die Transportanlage 4. Die Kessel 5.1; 5.2; 5.3 weisen die Elektrofilter 6.1; 6.2; 6.3, die Naßasche-Bandanlage 7 und die Trockenasche-Transportanlage 8 auf. Zwischen der Naßasche-Bandanlage 7 und dem Naßaschebunker 9 besteht die Transportanlage 10. Der Naßaschebunker 9 besitzt die Gleisanlage 11, die mit der Gleisanlage 3.2 verbunden ist.

Die Trockenasche-Transportanlage 8 ist mit dem Trockenasche-Bunker 12 verbunden. Unterhalb des Trockenasche-Bunkers 12 besteht die Gleisanlage 13.

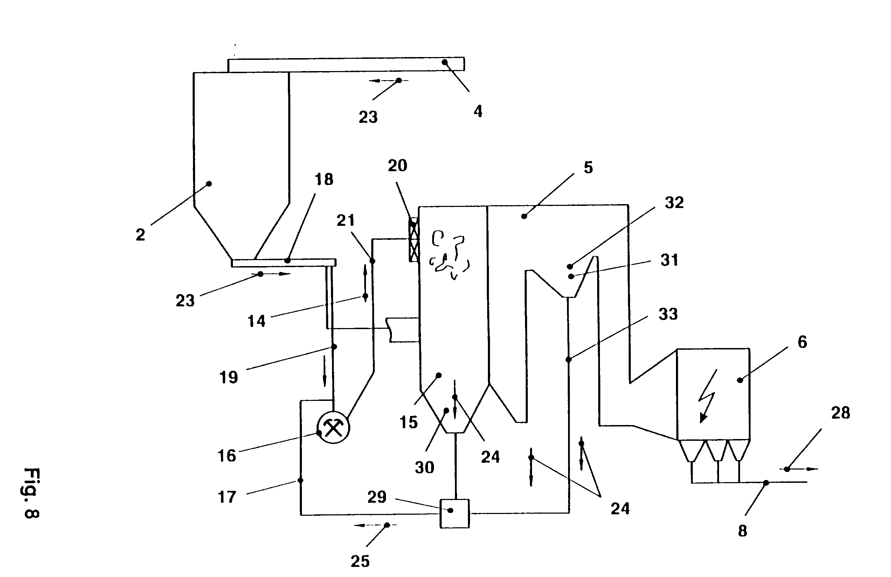

Am Kessel 5 ist zwischen der Brennkammer 15 und der Mahlanlage 16 die Transportanlage 17 aus der Naßentaschungsanlage 29 eingebunden (Fig. 8). Zwischen Kohlehochbunker 2 und Rauchgasrücksaugung 19 der Mahlanlage 16 besteht die Zuteileinrichtung 18. In der Naßentaschungsanlage 29 ist der Trichter 30 der Brennkammer 15 und der Trichter 31 des Rauchgaszuges 32 über die Leitung 33 eingebunden. Der Kessel 5 weist die Brenner 20 mit dem Staubkanal 21 auf.

Die Wirkungsweise ist folgende:

Die Rohkohle 22 wird über die Gleisanlage 3.1; 3.2 in den Kohletiefbunker 1 transportiert. Über die Transportanlage 4 wird die vorgebrochene Kohle 23 in den Kohlehochbunker 2 eingeleitet (Fig. 7).

Je Kessel 5 wird die Rohkohle 23 über Kohlehochbunker 2 und Zuteileinrichtung 18 der Mahlanlage 16 nach Leistungsbedarf zugeteilt (Fig. 8).

In der Mahlanlage 16 wird die Kohle 23 vermahlen und als Kohlenstaub-Trägergas-Gemisch 14 über den Staubkanal 21 den Brennern 20 zugeführt. Die Grobasche und das Unverbrannte 24 aus den Trichtern 30; 31 werden als Naßasche 25 über die Naßasche-Bandanlage 7, Transportanlage 10 in den Naßaschebunker 9 gesammelt.

Kontinuierlich und/oder diskontinuierlich wird die Naßasche 25 mittels Gleiswaggon 26 über die Gleisanlage 11 auf die gelagerte Rohkohle 22 im Kohletiefbunker 1 geschichtet, verkippt und/oder in gesonderten Bunkertaschen 27 gelagert. Die gesondert gesammelte Naßasche 25 wird aus den Bunkertaschen 27 der vorgebrochenen Kohle 23 zugemischt. Dabei liegt die Naßasche an der Kohle 23 und nimmt die Feuchtigkeit auf. Kohle 23 und Naßasche 25 gelangen entsprechend der Transportwege erneut in die Mahlanlage 16.

Aufgrund der Durchnässung des Unverbrannten 24 erfolgt in der Mahlanlage 16 eine gute thermische Gutzerkleinerung, wobei auch die Mahlbarkeit von mechanisch schwer mahlbaren Stoffen, wie Hackschnitzel, erreicht wird. Dieser Gutumlauf der Naßasche 25 wird bis zur vollständigen Zerkleinerung, Verbrennung und Entsorgung als Feinasche aufrechterhalten, so daß aus dem Kraftwerk keine zu entsorgende Naßasche anfällt. Die gesamte Asche wird als Trockenasche 28 aus den Elektrofilter 6 abgeführt, über Trockenasche-Transportanlage, Trockenasche-Bunker 12 und Gleisanlage 13 entsorgt. Die Grobasche und das Unverbrannte 24 werden als Naßasche 25 aus der Naßentaschungsanlage 29 über die Transportanlage 17 direkt der Mahlanlage 16 zugeteilt.

Wird einer Feuerung für einen Teil der Kohle Alkalien sowie Erdalkalien aufweisender Biostoff aufgegeben, so werden die durch die Verbrennung erzeugten Grobaschen als Additiv der Verbrennung und/oder Feinaschen auf den Rauchgasweg als Additiv dem Rauchgas zugegeben. Dadurch wird erreicht, daß durch die $SO_x$-freie Biostoffverbrennung ein Teil der durch die Kohleverbrennung sonst entstehenden $SO_x$-Emission entfällt (Verdünnungseffekt) und durch die freigesetzten Alkalien sowie Erdalkalien aus dem Biostoff für die Bindung des $SO_x$ aus der Kohleverbrennung genutzt wird.

Damit reduziert sich die $SO_x$-Emission nach der allgemeinen Beziehung wie folgt:

$$SO_{x\,neu} \approx \frac{RBK}{RBK + BM} \cdot SO_{x\,alt}$$

wobei bedeuten:

| | |
|---|---|
| $SO_{x\,neu}$ | $SO_x$-Emission mit Biostoffe |
| $SO_{x\,alt}$ | $SO_x$-Emission ohne Biostoffe |
| RBK | Kohlemenge |
| BM | Biostoffmenge. |

Anhand eines Ausführungsbeispiels wird die Erfindung näher erläutert.

Wird davon ausgegangen, daß die zu verbrennende Rohbraunkohle einen Schwefelgehalt von 0,5 %, der Biostoff ein Kaliumgehalt von 2 % und z. B. eine Biostoffzugabe von 10 % erfolgt, so ergibt sich folgendes:

Bei einer zu verbrennenden Kohlemenge von 100 t ergibt das eine freiwerdende Schwefelmenge von 500 kg, so daß für die Emission 2000 mg Schwefel pro 1 $Nm^3$ Rauchgas gebildet werden.

Bei einer Reduzierung der Kohlemenge auf 90 t wird eine Schwefelmenge von 450 kg frei. Durch die Beimischung von 10 t Biostoff für die Verbrennung wird kein Schwefel dafür jedoch 200 kg Kalium frei.

Das freiwerdende Kalium hat durch das Molmassenverhältnis von S : 2K ein Schwefelbindevermögen bei einem Einbindegrad von n = 0,5

$$S = \frac{Mol\ S}{Mol\ K} \cdot n \cdot Kaliummenge$$

$$= \frac{32}{2 \cdot 41} \cdot 0,5 \cdot 200\ kg$$

$$= \underline{39\ kg}$$

Für die Emission werden daher nur noch 411 kg Schwefel frei, so daß sich die Emission von $2000 \frac{mg}{Nm^3}$ auf

$$\frac{411\ kg\ Schwefel}{500\ kg\ Schwefel} \cdot 2000\ \frac{mg}{Nm^3} = 1644\ \frac{mg}{Nm^3}$$

verringert.

D. h. durch den Ersatz von 10 % Kohle durch 10 % Biostoffe wird die Schwefelemission um 17,8 % reduziert. Entsprechend dem Umfang des zuzumischenden Biostoffes ist eine Entschwefelung in den zulässigen Grenzwerten erreichbar. Zur Verbesserung der Wirkungsmechanismen werden die inaktiven. Teile der Grobaschen, z. B. Schlacke, und/oder der Feinaschen, z. B. Sand, abgetrennt.

Die Trennung der Grobaschen durch Aufschwemmung in der Naßentaschungsanlage der Feuerung und Führung des Wassers im Kreislauf ergibt weiterhin den Vorteil, daß die Löslichkeitsgrenze von Kaliumsalze überschritten wird, so daß sich diese nicht auflösen und in den Feuerungsprozeß eintreten können.

Aufgrund der günstigen technischen, umwelttechnischen und wirtschaftlichen Voraussetzungen werden in der Feuerung des Kohlekraftwerkes Holzhackschnitzel als Mischbrennstoff mit der Braunkohle verbrannt.

Dabei gelangen Holzhackschnitzel aus der mittels Hacker vor Ort durchgeführten Kiefern-Ganzbaum- und -Dünnholzhackung mit folgendem Anlieferungszustand ohne Zwischenlagerung in das Kraftwerk:

**Wassergehalt** 43 %

**Holzhackschnitzelzusammensetzung**

| | |
|---|---|
| Nadeln | ≤ 5 % |
| Rinde | ≤ 15 % |
| Splintholz | ≤ 80 % |
| Kernholz | ≤ 15 % |

**Holzhackschnitzelgröße** 5 mm bis 40 mm (einschließlich eines nicht quantifizierten Feinkornanteiles)

**Dichte** 250 - 350 kg/m$^3$

Bevor die Holzhackschnitzel im Kraftwerk für den Lager- und Trocknungsprozeß aufbereitet werden, sind diese über eine Feinstaub- und Magnetabscheidung zu fördern. Dadurch werden Feinkorn und evtl. eingetragene metallische Teile abgeschieden, so daß der Nachfolgeprozeß nicht gestört wird.

Danach wird abgeschätzt, wie sich aufgrund des Anlieferungszustandes der Holzhackschnitzel die Lagerzeit (Trokkenzeit) und der Wassergehalt entwickeln werden.

Diese Abschätzung erfolgt nach der mathematischen Beziehung:

$$x = at + x_o$$

mit den Bereichen

$$30 \leq x \leq x_o$$

und

$$0 \leq t \leq 40$$

Dabei bedeuten:

t =     Trocknungszeit in Tagen
x =     Wassergehalt in %
a =     Gradient der Wassergehaltsänderung in % pro Tag
$x_o$ =     Wassergehalt im Anlieferungszustand

Für die angelieferte Holzhackschnitzel-Charge ergibt sich dabei folgendes zeitliches Verhalten des Wassergehaltes im Innern des Haufwerkes: mit

$$x \approx - 0,3\, t + 42$$

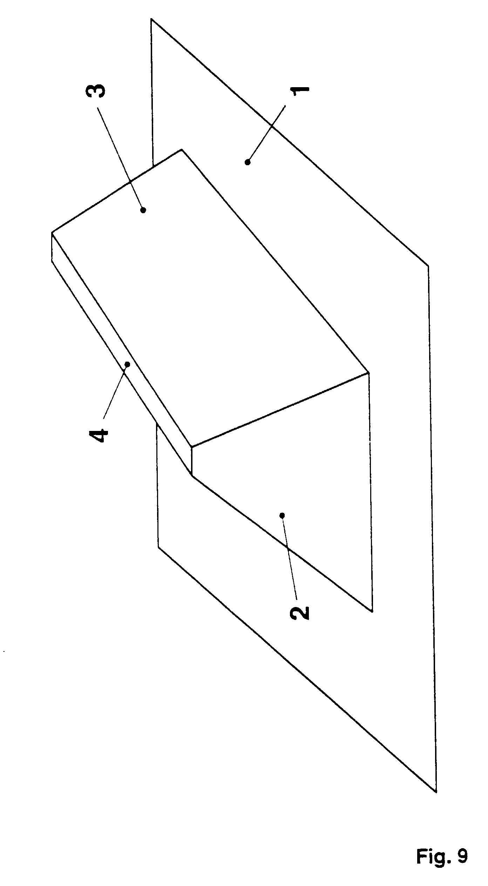

Die Holzhackschnitzel werden im Kraftwerk auf die vorbereitete Betonfläche 1 z. B. mittels Greifer eines Kranes aus minimaler Höhe als lockeres Haufwerk 3 aufgeschüttet (Fig. 9).

Diese Aufschüttung in Form des Dammes 2 bis zu einer Schütthöhe von ca. 6 m erfolgt unter einem Schüttwinkel von ca. 45 °

Aufgrund der aufzuschüttenden Menge (ca. 75 Tonnen) ergibt sich das Haufwerk 3 mit den Basisabmessungen von 12 m Länge und 8 m Breite.

Eine Überdachung ist bei normalen Wetterbedingungen nicht erforderlich. Ist mit sehr starken Niederschlägen zu rechnen, so sollte eine Abdeckung des Haufwerkes 3, z. B. mit einer speziellen Folie erfolgen.

Das so aufgebaute Haufwerk 3 stellt die Durchlauf- und Puffer-Anordnung dar, durch die die dynamische Lagerung und Trocknung erfolgt.

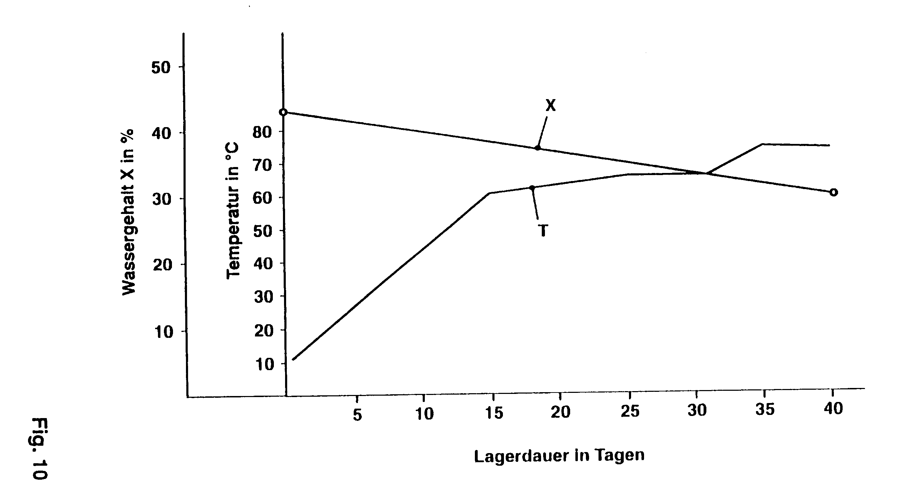

Das Haufwerk 3 bleibt nach dem Aufbau der Durchlauf- und Puffer-Anordnung geschlossen, so daß daraufhin folgende Temperaturerhöhungen einschließlich der Wassergehaltsminderung in Haufwerk 3 eintritt (Fig. 10):

| Tag | Temperatur | Wassergehaltsminderung |
|---|---|---|
| Anlieferungstag | 7 °C | 43 % |
| nach 7 Tagen | 35 °C | 40 % |
| nach 16 Tagen | 55 °C | 38 % |
| nach 30 Tagen | 60 °C | 35 % |
| nach 34 Tagen | 74 °C | 32 % |

Im geschlossenen Haufwerk 3 erfolgt aufgrund der Temperaturerhöhung im Inneren ein Ausdampfen des in den Hackschnitzeln enthaltenen Wassers und Einleiten des Wasserdampfes in die von der kühleren Umgebungsluft durchströmten Hohlräume des Haufwerkes 3. Aufgrund der losen Schüttung wird die warme feuchte Luft über natürliche Drainagen im Haufwerk 3 in die Umgebung freigesetzt.

Die Minderung des Wassergehaltes im Haufwerk 3 ist mit den Stoffströmen verknüpft, die durch die Temperaturunterschiede des Haufwerkes 3 zur Umgebungsluft eintreten und zur Veränderung der Holzfeuchte in Richtung der Wanderbewegung (Drainagen) der warmen Feuchtluft führen.

Nach ca. 30 Tagen Lagerzeit hat sich der Wassergehalt um mind. 25 % verringert (Fig. 10).

Eine Verlängerung der Lagerzeit ergibt keine wesentliche weitere Verminderung des Wassergehaltes der Holzhackschnitzel. Vielmehr sind die Bedingungen für die Verbrennung der Holzhackschnitzel erreicht, die eine technische, umweltschonende und wirtschaftliche Betriebsweise gewährleisten.

Das Haufwerk 3 wird entsprechend dem Förder- und Dosierregime der Feuerung abgetragen.

Für den kontinuierlichen Betrieb der Feuerung mit Holzhackschnitzeln ist es erforderlich, eine bestimmte Anzahl von Durchlauf- und Puffer-Anordnungen aufzubauen und zu betreiben.

Es wird ein einfaches Verfahren zur Ermittlung des Trocknungszustandes eines Holzhackschnitzel-Haufwerkes für Verbrennungszwecke beschrieben.

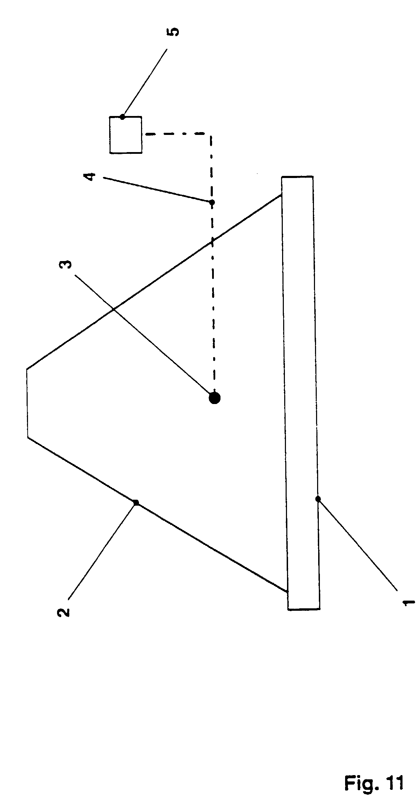

Auf der Bodenplatte 1 ist das locker aufgeschüttete Holzhackschnitzel-Haufwerk 2 gelagert (Fig. 11).

Im Zentrum des Haufwerkes 2 ist die Temperaturmeßstelle 3 angeordnet, die über die Leitung 4 mit dem Temperatur-Meß- und/oder -Registrier-Gerät 5 verbunden ist. Es sind auch Stichproben möglich.

Die natürliche Trocknung des Haufwerkes 2 läßt aufgrund der lockeren Schüttung eine freie Konvektion aller Bereiche zu, so daß in der ersten Trocknungsphase eine Temperatur von max. 80 °C erreicht wird. Bei Erreichen dieser Temperatur wurde der Wassergehalt der Holzhackschnitzel von > 40 % auf ca. 30 % reduziert.

Nach dieser Trocknungsphase wird entschieden, ob die Holzhackschnitzel für die Verbrennung bereits geeignet sind und zur Feuerung abgefördert werden oder das Haufwerk 2 zur weiteren Reduzierung der Feuchte weiterbetrieben werden soll.

Soll ein Weiterbetrieb des Haufwerkes 2 in einer zweiten Trocknungsphase erfolgen, so wird im Zentrum des Haufwerkes die Temperaturmeßstelle 3 durch eine Feuchtemeßstelle ersetzt und mit einem Feuchte-Meß- und/oder -Registrier-Gerät verbunden.

Eine weitere Temperaturmessung ist aufgrund der in der zweiten Trocknungsphase eintretenden Wirkungsmechanismen nicht real.

Der Weiterbetrieb des Haufwerkes 2 erfolgt danach anhand der ermittelten Entwicklung des Wassergehaltes auf einen vorgesehenen Endwert, z. B. von 25 %.

Danach werden die Holzhackschnitzel zur Feuerung abgefördert und dort verbrannt.

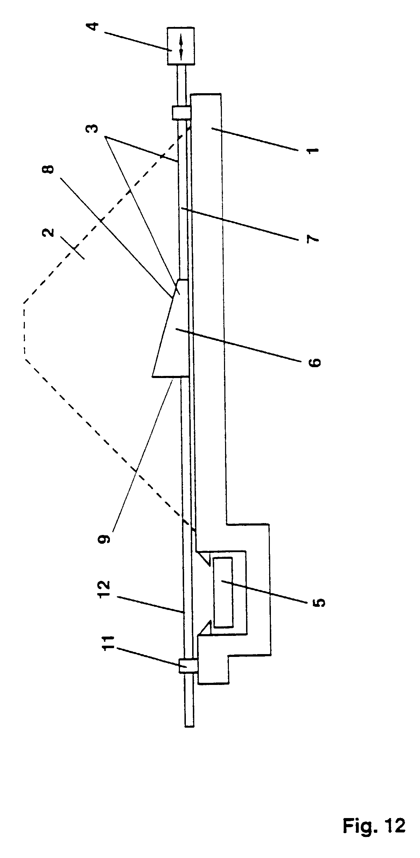

Auf der Bodenplatte 1 ist das Holzhackschnitzel-Haufwerk 2 aufgehaldet (Fig. 12).

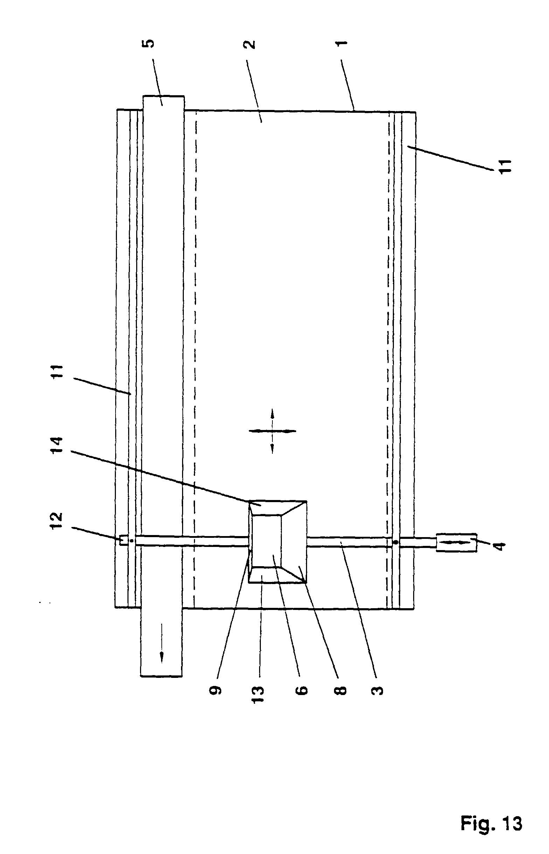

Über der Bodenplatte 1 ist die Schubeinrichtung 3 mit Antrieb 4 und längs des Haufwerkes 2 die Fördereinrichtung 5 vorgesehen. Die Schubeinrichtung 3 weist das Schubelement 6 auf, das mit dem Antrieb 4 über die Antriebsstange 7 verbunden ist. Das Schubelement 6 ist mit dem keilförmigen Teil 8 und dem schildförmigen Teil 9 versehen. Der Antrieb 4 ist als oszillierender Hydraulikantrieb ausgebildet. In Längsrichtung zur Ausbildung des Haufwerkes 2 ist die Portaleinrichtung 11 angeordnet (Fig. 13). Die Portaleinrichtung 11 weist den verfahrbaren Träger 12 auf, der das Schubelement 6 aufnimmt. Das Schubelement 6 weist weiterhin die keilförmigen Teile 13; 14 auf.

Es ist auch ohne weiteres möglich, über der Bodenplatte 1 mehrere Reihen von stationären Schubeinrichtungen 3 anzuordnen, die mit eigenen Antrieben 4 versehen sind.

Der Antrieb 4 ist als ein mobiles Gerät, z. B. ein Traktor, ausbildbar, um die abschnittsweise Vorschubbewegung (Fahrtrichtung) zu gewährleisten.

Es ist ohne weiteres möglich die Fördereinrichtung 5 mittig auf der Bodenplatte 1 anzuordnen und von den Seiten des Haufwerkes 2 die Schubeinrichtungen 3 als Teilschubeinrichtungen auszubilden. Dadurch wird das trockene Hackschnitzelgut in die Fördereinrichtung 5 gefördert.

Die Wirkungsweise ist folgende:

Mit dem Antrieb 4 wird das Schubelement 6 in oszillierende Bewegungen versetzt und das im Inneren des Haufwerkes 2 befindliche trockene Hackschnitzelgut zur Fördereinrichtung 5 gefördert (Fig. 12).

Dabei wird mit dem schildförmigen Teil 9 des Schubelementes 6 dieser Förderprozeß realisiert. Durch die keilförmigen Elemente 8 gelangt das Schubelement 6 wieder in die Ausgangsstellung, so daß erneut das in den Bereich der Schubeinrichtung 3 gelangende trockene Hackschnitzelgut erfaßt wird. Die Abförderung mit der Portaleinrichtung 11 (Fig. 13) erfolgt dabei abschnittsweise innerhalb des Haufwerkes 2. Mittels der keilförmigen Teile 13; 14 des Schubelementes 3 ist gewährleistet, daß der Vortrieb des Schubelementes 3 innerhalb des Haufwerkes möglich ist.

Das trockene Hackschnitzelgut wird über die Fördereinrichtung 5 zur Feuerung z. B. für einen kohlenstaubgefeuerten Dampfkessel gefördert.

Das im Scheitelbereich und in den Böschungsbereichen des Haufwerkes 2 befindliche feuchte Hackschnitzelgut wird nur mit geringen Anteilen in den Förderprozeß einbezogen. Dieses feuchte Gut verbleibt am Schluß des Förderprozesses auf der Bodenplatte 1 und bildet den Grundstock für ein neu zu errichtendes Haufwerk.

Durch die Erfindung werden folgende Vorteile erreicht:

1. Mahlbarmachung von Biostoffen

2. Verbrennung von Biostoffen mit großem Körnungsband

3. Einhaltung einer erforderlichen Liegezeit und gute Aufbereitung der Biostoffe einschließlich Ermittlung des Trocknungszustandes

4. Kontinuierliche und/oder diskontinuierliche Zustellung

5. Nutzung der Verbrennungsanlage bestehender Dampfkessel

6. Nutzung der Entsorgungsanlage einer bestehenden Dampfkesselanlage

7. Verbrennung der Biostoffe im hohen Temperaturfeld des Dampfkessels

8. Vollständiger Abbrand des Unverbrannten durch Rückführung

9. Verringerung des $CO_2$-Gehaltes

10. Verringerung des $SO_x$-Ausstoßes

11. Anwendung der Erfindung für Wirbelschichtfeuerung


Aufstellung der verwendeten Bezugszeichen zu Fig. 1


| 1 | Dampfkessel |
| 2 | Rauchgasrücksaugung |
| 3 | Mahlanlage |
| 4 | Staubleitung |
| 5 | Brenner |
| 6 | Rohkohleschacht |
| 7 | Zuteiler |
| 8 | Biostoffschacht |
| 9 | Vorratsbehälter |
| 10 | Zuteilband |
| 11 | Zuteiler |
| 12 | Anschlußkanal |
| 13 | Gaskanal |
| 14 | Sichter |
| 15 | Zusatzmahlanlage |
| 16 | Sichter |
| 17 | Kanal |
| 18 | Staubschacht |
| 19 | Brenner |
| 20 | Einblaseeinrichtung |
| 21 | Stirnwand |
| 22 | Brennkammer |
| 23 | Rauchgasrücksaug-Schacht |
| 32 | Rauchgas |
| 33 | Rohbraunkohle |
| 34 | Biostoff |
| 35 | Gas |
| 36 | Biostoff |
| 37 | Staubstrom |
| 38 | Biostoff-Staub-Gemisch |
| 39 | Luft |
| 40 | Heißluftkanal |
| 41 | Flamme |
| 42 | Staubflamme |
| 47 | Staubstrahl |
| 48 | Rohbraunkohle |
| 49 | Heißgasanteil |


Aufstellung der verwendeten Bezugszeichen zu Fig. 2 und 3


| 1 | Dampfkessel |
| 2 | Brennkammer |
| 3 | Aschetrichter |
| 4 | Berohrung |

5 Kohlenstaubmühle
6 Rauchgasrücksaugung
7 Kohlezufuhr
8 Kohlenstaubleitung
9 Kohlenstaubbrenner
10 Lüfter
11 Heißluftkanal
12 Verbrennungsluftleitung
13 Heißluftkasten
14 Öffnungen
15 Einblaseeinrichtung
16 Zerkleinerungseinrichtung
17 Heißluftkanal
18 Transportleitung
19 Stirnwand
20 Ausbrandkammer
21 Durchtrittsgitter
22 Berohrung
23 Siebrost
24 Ausbrandgas
25 Rücksauggas
26 Luftdüse
27 Leitung
28 Regelklappen
29 Rauchgas
30 Kohle
31 Kohlenstaub-Rauchgas-Gemisch
32 Flamme
33 Rezirkulationswirbel
34 Biostoff
35 Heißluft
36 Biostoff-Heißluft-Gemisch
37 Verteilerrohr
38 Gas
39 Luft
40 Anteil
41 Unterteil
42 Biostoff

Aufstellung der verwendeten Bezugszeichen zu Fig. 4

1 Dampfkessel
2 Kohlenstaub-Mahlanlage
3 Ölbrenneranlage
4 Kratzerband
5 Luftversorgungs-Hauptleitung
6 Aschetrichter
7 Vorfeuerung
8 Biostoff
9 Bunker
10 Transportanlage
11 Zuteiler
12 Brennkammer
13 Verbrennungsluft
14 Regeleinrichtung
15 Frischlüfter
16 Kohlenstaubbrenner
17 Heißluftklappe

18 Heißgas
19 Heißgasleitung
20 Brennkammer
21 Heißgaswirbel
22 Brenngas
23 Ascheleitung
24 Asche
25 Naßascheentsorgung
26 Ölbrenner
27 Versorgungsleitung
28 Heizfläche
29 Kohlenstaub-Fördergas-Gemisch
30 Brenner
31 Luftkasten
32 Luftkanal
33 Nachschaltheizfläche
34 Verbrennungsluftleitung
35 Sicherheits- und Notschaltung


Aufstellung der verwendeten Bezugszeichen zu Fig. 5 und 6


1 Dampfkessel
2 Rauchgasrücksaugung
3 Mahlanlage
4 Kohlenstaubbrenner
5 Aschetrichter
6 Naßentaschungsanlage
7 Naßascheaustrag
8 Naßascheband
9 Transporteinrichtung
9.1 Trog
9.2 Trog
10 Trennanlage
11 Biostoff-Transportanlage
12 Zuteiler
13 Biostoffspeicher
14 Kratzerkette
15 Obertrum
16 Wasserbad
17 Untertrum
18.1 Trogwange
18.2 Trogwange
19 Überlauf
20.1 Ablaufrinne
20.2 Ablaufrinne
21 Trog
22 Siebboden
23 Wasserleitboden
24 Becher
25 Transporteinrichtung
26 Ablaufkanal
27 Saugleitung
28 Pumpe
29 Druckleitung
30 Regeleinrichtung
31 Strahlapparat
32 Wasserstand
33 Zusatzwasserleitung

| 34 | Zusatzwasserleitung |
|----|---------------------|
| 35 | Austrageinrichtung |
| 36 | Rohbraunkohle |
| 37 | Biostoff |
| 38 | Staubleitung |
| 39 | Kohlen-Biostoff-Staubgemisch |
| 40 | Brennkammer |
| 41 | Unverbranntes |
| 42 | Wasser-Unverbranntes-Gemisch |
| 43 | Stutzen |
| 44 | Wasser |
| 45 | Frischwasser |

Aufstellung der verwendeten Bezugszeichen zu Fig. 7 und 8

| 1 | Kohletiefbunker |
|----|----|
| 2 | Kohlehochbunker |
| 3.1 | Gleisanlage |
| 3.2 | Gleisanlage |
| 4 | Transportanlage |
| 5 | Kessel |
| 5.1 | Kessel |
| 5.2 | Kessel |
| 5.3 | Kessel |
| 6.1 | Elektrofilter |
| 6.2 | Elektrofilter |
| 6.3 | Elektrofilter |
| 7 | Naßasche-Bandanlage |
| 8 | Trockenasche-Transportanlage |
| 9 | Naßasche-Bunker |
| 10 | Transportanlage |
| 11 | Gleisanlage |
| 12 | Trockenasche-Bunker |
| 13 | Gleisanlage |
| 14 | Kohlenstaub-Trägergas-Gemisch |
| 15 | Brennkammer |
| 16 | Mahlanlage |
| 17 | Transportanlage |
| 18 | Zuteileinrichtung |
| 19 | Rauchgasrücksaugung |
| 20 | Brenner |
| 21 | Staubkanal |
| 22 | Rohkohle |
| 23 | Kohle |
| 24 | Unverbranntes |
| 25 | Naßasche |
| 26 | Gleiswaggon |
| 27 | Bunkertasche |
| 28 | Trockenasche |
| 29 | Naßentaschungsanlage |
| 30 | Trichter |
| 31 | Trichter |
| 32 | Rauchgaszug |
| 33 | Leitung |

Aufstellung der verwendeten Bezugszeichen zu Fig. 11

| 1 | Bodenplatte |
|----|----|

2    Haufwerk

3    Temperaturmeßstelle

4    Leitung

5    Temperatur-Meß- und/oder -Registrier-Gerät

Aufstellung der verwendeten Bezugszeichen zu Fig. 12 bis 13

1    Bodenplatte

2    Holzhackschnitzel-Haufwerke

3    Schubeinrichtung

4    Antrieb

5    Fördereinrichtung

6    Schubelement

7    Antriebsstange

8    keilförmiges Teil

9    schildförmiges Teil

10   Reihe

11   Portaleinrichtung

12   verfahrbarer Träger

13   keilförmiges Teil

14   keilförmiges Teil

**Patentansprüche**

1.  Verfahren zur Verbrennung von Biostoff, insbesondere Holzhackschnitzel, in einem kohlenstaubgefeuerten Dampfkessel,
    **gekennzeichnet dadurch,**
    daß der Biostoff als ein Brennstoff-Teilstrom und die aus der Trocknung, Entgasung und/oder Teilverbrennung des Biostoffs erzeugten Gase als ein Gas-Teilstrom in eine Kohlenstaubmühle und Rauchgasrücksaugung und dann in die Brennkammer und/oder direkt in die Brennkammer des Dampfkessels eingetragen und die Verbrennungsprodukte als ein Verbranntes-Teilstrom über eine Rauchgasreinigung und als ein Unverbranntes-Teilstrom über eine Naßentaschungsanlage ausgetragen wird, wobei das Unverbrannte als Brennstoff-Teilstrom in die Kohlenstaubmühle, Rauchgasrücksaugung und Brennkammer und/oder Ausbrandrost oder direkt in die Brennkammer und/oder Ausbrandrost des Dampfkessels zurückgeführt wird.

2.  Verfahren nach Anspruch 1, gekennzeichnet dadurch, daß die Biostoffe in und/oder an einem Brennkammerbereich des Dampfkessels getrocknet sowie entgast und verbrannt werden und daß das Unverbrannte der Biostoffe in die Rauchgasrücksaugung und/oder die Kohlenstaubmühle gefördert wird.

3.  Verfahren nach Anspruch 1 mit einer Vorfeuerung, gekennzeichnet dadurch, daß die Vorfeuerung direkt mit dem Heißluft-, Zündbrenner-, Mahlanlagen-, Hauptbrenner-, Brennkammer-, Heizflächen-, Rauchgas- und Entaschungssystem sowie mit der Sicherheits- und Notschaltung des Dampfkessels gefahren wird.

4.  Verfahren nach einem der Ansprüche 1 und 2, wobei ein Grobasche-Unverbrannte-Gemisch der Rohkohle aufgegeben wird, gekennzeichnet dadurch, daß das Grobasche-Unverbrannte-Gemisch im Kreislauf Naßentaschungsanlage-Brennstoffaufgabe-Brennkammer gefahren und nach einem oder mehreren Kreisläufen stufenweise verbrannt sowie stufenweise als Feinasche über die Rauchgaszüge entsorgt wird.

5.  Verfahren nach einem der Ansprüche 1 bis 4 zur Verringerung der $SO_2$-Emission bei der Verbrennung von schwefelhaltiger Kohle, gekennzeichnet dadurch, daß der Feuerung für einen Teil der Kohle Alkalien sowie Erdalkalien aufweisenden Biostoff aufgegeben wird, die durch die Verbrennung erzeugten Grobaschen als Additiv der Verbrennung und/oder Feinaschen auf den Rauchgasweg als Additiv dem Rauchgas zugegeben werden.

6.  Verfahren zur Verbrennung von Biostoffen nach einem der Ansprüche 1 bis 5, gekennzeichnet dadurch, daß zur Trocknung von Biostoff, insbesondere von Holzhackschnitzeln aus Nadelholz, der Biostoff, insbesondere Holzhackschnitzel, im Anlieferungszustand in einer als lockeres, natürliche Drainagen ausbildendes Haufwerk, aufgeschütteten, einen festen Untergrund aufweisenden Durchlauf- und Puffer-Anordnung dynamisch gelagert sowie getrocknet werden und die Durchlauf- und Puffer-Anordnung in Abhängigkeit von der Zusammensetzung der Holzhackschnitzel, dem Wassergehalt, den Außentemperaturen sowie den Niederschlagsmengen zeitlich begrenzt betrieben wird.

**7.** Anordnung zur Verbrennung von Biostoff, insbesondere Holzhackschnitzel, in einem kohlenstaubgefeuerten Dampfkessel,
**gekennzeichnet dadurch**,
daß ein Biostoffzuteiler in die Kohlenstaubmühle, Rauchgasrücksaugung und/oder Brennkammer und/oder in eine Trocknungs-, Entgasung- und/oder Verbrennungseinrichtung an einem Brennkammerbereich des Dampfkessels eingebunden ist und die Naßentaschungsanlage des Dampfkessel über einen Unverbranntes-Zuteiler in die Kohlenstaubmühle, Rauchgasrücksaugung und Brennkammer und/oder Ausbrandrost oder direkt in die Brennkammer und/oder Ausbrandrost des Dampfkessels eingebunden ist.

**8.** Anordnung nach Anspruch 7, gekennzeichnet dadurch, daß in und/oder an einem Brennkammerbereich eine Trocknungs-, Entgasungs- und Verbrennungs-Einrichtung angeordnet ist, in die ein Zuteiler eingebunden und die mit der Rauchgasrücksaugung und/oder der Kohlenstaubmühle verbunden ist.

**9.** Anordnung nach Anspruch 8 mit einer Vorfeuerung, gekennzeichnet dadurch, daß die Vorfeuerung direkt in die Dampfkessel-Heißluft-, -Zündbrenner-, -Mahl-, -Hauptbrenner-, -Brennkammer-, -Heizflächen-, -Rauchgas- und -Entaschungsanlage eingebunden sowie mit der Sicherheits- und Notschaltung des Dampfkessels gekoppelt ist.

**10.** Verfahren zur Verbrennung von Biostoff, insbesondere Holzhackschnitzel, in einer Wirbelschichtfeuerung,
**gekennzeichnet dadurch,**
daß der Biostoff als ein Brennstoff-Teilstrom und die aus der Trocknung, Entgasung und/oder Teilverbrennung des Biostoffs erzeugten Gase als ein Gas-Teilstrom in die Wirbelschichtfeuerung eingetragen und die Verbrennungsprodukte als ein Verbranntes-Teilstrom über eine Rauchgasreinigung ausgetragen wird, wobei das Unverbrannte als ein Brennstoff-Teilstrom in die Wirbelschichtfeuerung zurückgeführt wird.

## Claims

**1.** A process for the combustion of biological matter, particularly wood chips, in a pulverized coal-fired boiler
**wherein**
the biological matter is introduced as a fuel split stream and the gases resulting from the drying, degasification and/or partial combustion of the biological matter are introduced as a gas split stream into a pulverizer and a flue-gas recirculation unit and subsequently into the combustion chamber and/or directly into the combustion chamber of the steam boiler and wherein the combustion products are discharged as a split stream of burned matter via a flue-gas cleaning unit and as a split stream of unburned matter via a wet-ash removal unit, with the unburned matter being recirculated as a fuel split stream to the pulverizer, flue-gas recirculation unit and the combustion chamber and/or the burn-out grate or directly to the combustion chamber and/or the burn-out grate of the steam boiler.

**2.** A process as claimed in claim 1 wherein the biological matter is dried, degassed and burned in and/or near a combustion-chamber area of the steam boiler and wherein the unburned part of the biological matter is fed in the flue-gas recirculation unit and/or the pulverizer.

**3.** A process as claimed in claim 1 comprising an external furnace wherein the external furnace is operated directly with the hot air-, ignition burner-, pulverizer-, main burner-, combustion chamber-, heating surfaces-, flue gas- and ash removal systems as well as with the safety and emergency circuits of the steam boiler.

**4.** A process as claimed in either claim 1 or claim 2 comprising the addition of a mixture of coarse ash and unburned matter to the raw coal wherein the mixture of coarse ash and unburned matter is recirculated through the wet-ash removal unit, fuel-feeding unit, combustion chamber and burned gradually after the completion of one or several cycles and disposed of gradually as fine ash via the flue-gas passes.

**5.** A process as claimed in one of claims 1 to 4 for the reduction of $SO_2$ produced during the combustion of sulphurous coal wherein part of the coal used for firing is replaced by biological matter containing alkali or alkaline-earth and wherein the coarse ashes resulting from the combustion are fed as an additive to the firing and/or the fine ashes in the flue-gas pass are fed as an additive to the flue gas.

6. A process for the combustion of biological matter as claimed in one of claims 1 to 5 wherein for the drying of biological matter, especially timber wood chips, the biological matter, especially wood chips, is dynamically stored and dried as supplied in a loose heap facilitating natural drainage in a continuous and buffer arrangement on a solid base and wherein the continuous and buffer arrangement is operated for a limited period of time depending on the composition of the wood chips, their water content, the outdoor temperature and the quantity of precipitation.

7. An arrangement for the combustion of biological matter, particularly wood chips, in a pulverized coal-fired boiler **wherein**
   a biological matter feeder is integrated into the pulverizer, flue-gas recirculation and/or combustion chamber and/ or in a drying, degasification and/or combustion unit near a combustion-chamber area of the steam boiler and wherein the wet-ash removal unit of the steam boiler is integrated via an unburned matter feeder into the pulverizer, flue-gas recirculation unit and combustion chamber and/or burn-out grate or directly into the combustion chamber and/or the burn-out grate of the steam boiler.

8. An arrangement as claimed in claim 7 wherein a drying-, degasification and combustion unit comprising a feeder and being linked with the flue-gas recirculation unit and/or the pulverizer is arranged in and/or near a combustion-chamber area.

9. An arrangement as claimed in claim 8 comprising an external furnace wherein the external furnace is integrated directly into the hot air-, ignition burner-, pulverizer-, main burner-, combustion chamber-, heating surfaces-, flue gas- and ash removal systems of the steam boiler and cooperates with the safety and emergency circuits of the steam boiler.

10. A process for the combustion of biological matter, particularly wood chips, in a fluidized-bed furnace **wherein**
    the biological matter is fed as a fuel split stream and the gases resulting from the drying, degasification and/or partial combustion of the biological matter are fed as a gas split stream into the fluidized-bed furnace and wherein the combustion products are discharged as an unburned matter split stream via a flue-gas cleaning unit, with the unburned matter being recirculated to the fluidized-bed furnace as a fuel split stream.

**Revendications**

1. Procédé de combustion de matière organique, en particulier de copeaux de bois, dans une chaudière à vapeur chauffé au charbon pulvérisé, caractérisé en ce que la matière organique, en tant que courant partiel de combustible, et les gaz produits à partir du séchage, du dégazage et/ou de la combustion partielle de la matière organique, en tant que courant partiel gazeux, sont introduits dans un pulvérisateur de charbon et dans un dispositif d'aspiration en retour de gaz -de fumée et alors dans la chambre de combustion et/ou directement dans la chambre de combustion de la chaudière à vapeur et les produits de combustion sont évacués en tant que courant partiel de matière brûlée par l'intermédiaire d'un dispositif de nettoyage de gaz de fumée, et en tant que courant partiel de matière non brûlée par l'intermédiaire d'une installation humide d'évacuation des cendres, la matière non brûlée étant reconduite en tant que courant partiel de combustible dans le pulvérisateur de charbon, le dispositif d'aspiration en retour de gaz de fumée et la chambre de combustion et/ou la grille de combustion complète ou directement dans la chambre de combustion et/ou la grille de combustion complète de la chaudière à vapeur.

2. Procédé selon la revendication 1, caractérisé en ce que les matières organiques sont séchées ainsi que soumises à un dégazage et brûlées dans et/ou près d'un domaine de la chambre de combustion de la chaudière à vapeur et en ce que la matière non brûlée des matières organiques est acheminée dans le dispositif d'aspiration en retour de gaz de fumée et/ou le pulvérisateur de charbon.

3. Procédé selon la revendication 1, ayant un foyer antérieur, caractérisé en ce que le foyer antérieur est opéré directement à l'aide du système d'air chaud, de veilleuse, d'installations de broyage, de brûleur principal, de chambre de combustion, de surfaces de chauffe, de gaz de fumée et d'évacuation des cendres ainsi qu'à l'aide du circuit de sécurité et d'urgence de la chaudière à vapeur.

4. Procédé selon l'une quelconque des revendications 1 et 2, un mélange cendres grossières-matière non brûlée étant déchargé au charbon brut, caractérisé en ce que le mélange cendres grossières-matière non brûlée est mis en circulation dans le circuit fermé installation humide d'évacuation des cendres-décharge de combustible-chambre de combustion et est brûlé par étapes après un ou plusieurs circuits fermés ainsi que mis au rebut par étapes sous forme de cendre fine par l'intermédiaire d'évents de gaz de fumée.

5. Procédé selon l'une quelconque des revendications 1 à 4 en vue de la diminution de l'émission de $SO_2$ lors de la combustion de charbon contenant du soufre, caractérisé en ce que se décharge au foyer pour une partie du charbon une matière organique présentant des métaux alcalins ainsi que des métaux alcalino-terreux,, et en ce que les cendres grossières et/ou les cendres fines, produites par la combustion sont ajoutées en tant qu'additif à la combustion et/ou, respectivement, sur le trajet du gaz de fumée, en tant qu'additif au gaz de fumée.

6. Procédé de combustion de matières organiques selon l'une quelconque des revendications 1 à 5, caractérisé en ce que, en vue du séchage de matière organique, en particulier de copeaux de bois obtenus à partir de bois résineux, l'on stocke de manière dynamique et l'on sèche la matière organique, en particulier des copeaux de bois, telle qu'elle existe à l'état de livraison, dans un arrangement de passage et de tampon présentant un fond solide, rapporté, en tant que tas de débris formant un drainage lâche naturel, et l'on fait fonctionner, avec une limite dans le temps, l'arrangement de passage et de tampon en fonction de la composition des copeaux de bois, de la teneur en eau, de la température extérieure ainsi que des quantités de précipité.

7. Arrangement de combustion de matière organique, en particulier de copeaux de bois, dans une chaudière à vapeur chauffée à la poussière de charbon, caractérisé en ce qu'un distributeur de matière organique est intégré dans le pulvérisateur de charbon, l'installation d'aspiration en retour de gaz de fumée et/ou la chambre de combustion et/ou dans un dispositif de séchage, de dégazage, et/ou de combustion près d'un domaine de la chambre de combustion de la chaudière à vapeur et l'installation humide d'évacuation des cendres de la chaudière à vapeur est intégrée, par l'intermédiaire d'un distributeur de matière non brûlée, dans le pulvérisateur de charbon, le dispositif d'aspiration en retour de gaz de fumée et la chambre de combustion et/ou la grille de combustion complète ou directement dans la chambre de combustion et/ou la grille de combustion complète de la chaudière à vapeur.

8. Arrangement selon la revendication 7, caractérisé en ce que, dans et/ou près d'un domaine de la chambre de combustion est disposé un dispositif de séchage, de dégazage et de combustion, dans lequel est intégré un distributeur et qui est relié avec le dispositif d'aspiration en retour de gaz de fumée et/ou le pulvérisateur de charbon.

9. Arrangement selon la revendication 8, ayant un foyer antérieur, caractérisé en ce que le foyer antérieur est intégré directement dans l'installation d'air chaud, de veilleuse, de broyage, de brûleur principal, de chambre de combustion, de surfaces de chauffe, de gaz de fumée et d'évacuation des cendres, de la chaudière à vapeur ainsi que couplé au circuit de sécurité et d'urgence de la chaudière à vapeur.

10. Procédé de combustion de matière organique, en particulier de copeaux de bois, dans un foyer à couche turbulente, caractérisé en ce que la matière organique, en tant que courant partiel de combustible, et les gaz produits à partir du séchage, du dégazage et/ou de la combustion partielle de la matière organique, en tant que courant partiel gazeux, sont introduits dans un foyeur à couche turbulente et les produits de combustion sont évacués en tant que courant partiel de matière brûlée par l'intermédiaire d'un dispositif de nettoyage de gaz de fumée, la matière non brûlée étant reconduite en tant que courant partiel de combustible dans le foyer à couche turbulente.

Fig. 1

**Fig. 2**

**Fig. 3**

**Fig. 4**

Fig. 5

Fig. 6

**Fig. 7**

Fig. 8

Fig. 9

Fig. 10

EP 0 694 148 B1

Fig. 11

28

Fig. 12

Fig. 13